# EUROPEAN PATENT SPECIFICATION

(11) **EP 1 133 393 B1**
(45) Date of publication and mention of the grant of the patent: **05.02.2003**
(21) Application number: 99972153.3
(22) Date of filing: 16.11.1999
(51) Int. Cl.: B32B 27/32, C08L 23/04

(54) **MULTILAYER POLYOLEFIN LAMINATE HAVING NON-OUTER LAYER OF SYNDIOTACTIC POLYPROPYLENE**
MEHRSCHICHTIGER POLYOLEFINVERBUND MIT NICHT AUSSENLIEGENDER SYNDIOTAKTISCHER POLYPROPYLENSCHICHT
FILM MULTICOUCHE EN POLYOLEFINE COMPRENANT UNE COUCHE NON EXTERNE DE POLYPROPYLENE SYNDIOTACTIQUE

(30) Priority: 16.11.1998 US 108590 P
(43) Date of publication of application: 19.09.2001
(73) Proprietor: DUPONT CANADA INC., Mississauga, Ontario L5N 5M8 (CA)
(72) Inventor: SMILLIE, Benjamin Andrew,, Kingston, Ontario K7M 3N7 (CA)
(74) Representative: James, Anthony Christopher W.P.
(86) International application number: CA9901089
(87) International publication number: WO00029211

(56) References cited:
- EP-A- 0 499 216
- WO-A-95/10566

## Description

### FIELD OF THE INVENTION

This invention relates to a clear, easy to heat seal, multilayer polyolefin film for vertical form fill seal packaging (VFFS). Syndiotactic polypropylene (sPP) is used in the multilayer film in at least one non-outer layer. An ethylene alpha-olefin copolymer with a density less than 0.91 gm/cc is used in at least one outer layer. The film may be used to manufacture pouches for flowable materials.

### BACKGROUND OF THE INVENTION

Films of this invention are used to make packages. One step, in that package making operation is a cut through heat seal. While the advent of single-site catalyst or metallocene catalyst polymers has provided polyethylene for films with improved hot tack strength, the amount of heat required to develop a cut through seal remains high. Because of the high heat, the element that creates the cut through seal requires frequent maintenance to maintain satisfactory operation. There remains an ongoing need to reduce the heat required to cut through seals of such packages. This is especially true for fluid containing pouches, e.g. milk and juice pouches.

Hot tack strength is the ability of a film to seal under stress while still in a molten state. This property is one of the most critical in packaging applications where machines run at high speeds and sealing takes place between molten sealing components of a filled package, thereby placing the sealing components, and hence the seal under stress when the package is formed, filled and sealed.

It should be noted that in the case of fluid containing pouches made on form, fill and seal equipment, there appears to be a correlation between seal leaker frequency and hot tack strength. This is supported by data gathered in the dairy industry.

The development of single-site catalyst (SSC) or metallocene technology has brought about an improved class of polymers ranging from crystalline to elastomeric materials. These polymers have features such as improved impact strength and toughness, better melt characteristics, because of the control over molecular structure, and better clarity. Exxon and Dow have developed ethylene interpolymers made with SSC or metallocene catalysts and each has the benefit of a number of patents relating to these polymers. Exxon is said to use mono- and bis-cyclopentadienyl metallocenes, while Dow's focus is on titanium cyclopentadienyl metallocenes, which it calls "constrained geometry catalysts".

In practice, Exxon produces ethylene-butene and ethylene-hexene interpolymers, while Dow makes ethylene-octene interpolymers of the metallocene or SSC type. Dow claims that its metallocene or SSC polymers are different as they have a low level of long chain branching that improves processability in otherwise linear polymers.

Polypropylene films are known and useful for their advantageous stiffness and optics/clarity. Generally polypropylene films are not used in form fill seal packages due to their low heat seal strength and poor tear resistance. Polypropylene properties are influenced by many factors including: 1. Comonomer constituents; 2. Randomness of comonomer inclusion; 3. Molecular weight distribution; and 4. Stereoconfiguration of monomer units with the polymer ("tacticity"). A key property is the polypropylene's melting point. Increasing the melting point increases the sealing temperature, orientation conditions, and processability, among other properties.

Conventional isotactic polypropylenes (homopolymers and copolymers) are generally produces via Ziegler-Natta catalysis. The syndiotactic polypropylenes of this invention have been made commercially feasible by the introduction of stero-specific metallocene catalysts. Syndiotactic polypropylene (sPP) may be defined as a polymer made from propylene monomer where the methyl group attached to the pseudochiral centre carbon (denoted by the *) on the repeating unit alternates in position. The two dimensional representation of the propylene repreating unit is shown below 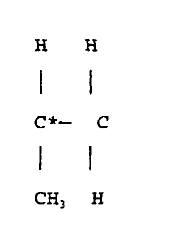 A two dimensional model (or Fisher projection) has been used to display the structure of the syndiotactic polypropylene below 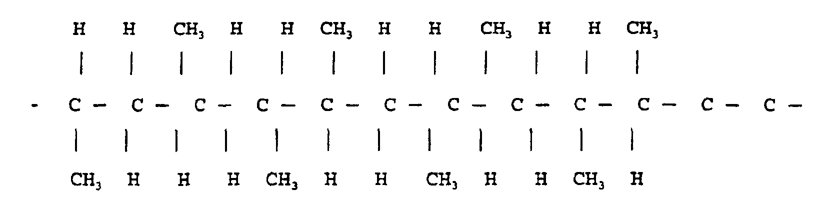 The degree to which a polymer is syndiotactic can be measured by proton NMR. When the methyl groups on a pair of adjacent pseudochiral centers are on racemic (opposite) sides this is called an "r" placement. When the methyl groups on a pair of adjacent pseudochiral centers are on meso (same) sides this is called an "m" placement. When the methyl groups around three consecutive pseudochiral centres are all alternating this sequence is called an rr triad. Similarly when the methyl groups around four and five and five consecutive pseudochiral centres alternate in position the sequences are called rrr tetrad and rrrr pentads respectively. The syndiotactic polypropylene of this invention when measured by proton NMR had at least 60% rrrr pentads and a melt index of less than 2.

### BACKGROUND ART

Examples of the metallocene or single-site catalyst polymers of Exxon are found in the following patents and applications, the disclosures of which are incorporated herein by reference, U.S. Patent No. 5,382,630 issued January 17, 1995 to Stehling et al and W093/03093 published February 18, 1993 to Meka et al. These polymers are generally interpolymers of ethylene and at least one alpha-olefin that may be used to produce film for use in making VFFS packaging.

Examples of the polymers of metallocene or single-site catalyst polymers of Dow are found in the following patents, the disclosures of which are incorporated herein by reference: U.S. Patents Nos. 5,508,051 issued April 16, 1996 to Falla et al; 5,360,648 issued November 1, 1994 to Falla et al; 5,278,272 issued January 11, 1994 to Lai et al; and 5,272,236 issued December 21, 1993 to Lai et al.

Syndiotactic polypropylene may be manufactured by the use of metallocene catalysts, several of which have been developed by various companies, e.g., Fina, Mitsui Toatsu, Hoechst, Exxon, etc. Examples of such catalysts are described in Fina's U.S. Patent No. 4,892,851 and U.S. Patent No. 5,476,914.

U.S. Patent No. 5,525,690 issued June 11, 1996 to Chien, et al describes catalysts that are highly selective for racemic (opposite) placement of the methyl group on corresponding pairs. The metallocene catalysts typically produce syndiotactic polyproylene with upwards of at least about 60% *rrrr* pentads.

In DUPONT CANADA INC.'s PCT International Publication WO 95/10566 published April 20, 1995, the disclosure of which is incorporated herein by reference, there are disclosed pouches for flowable materials wherein the sealant film is made from a SSC copolymer of ethylene and at least one C₄-C₁₀ α-olefin. Blends of these SSC copolymers are described with at least one polymer selected from multi site catalyst linear copolymers of ethylene and at least one C₄-C₁₀ α-olefin, a high pressure polyethylene and blends thereof.

In DUPONT CANADA INC.'s PCT International Publication WO 95/21743 published August 17, 1995, the disclosure of which is incorporated herein by reference, there is disclosed an ethylene copolymer film of improved stiffness for use in the manufacture of fluid containing pouches. Typically, the structure comprises an interposed layer of polyethylene having a thickness in the range of 5 to 20 microns and a density of at least 0.93 gm/cc and a melt index of from about 1 to 10 dg/minute, and at least one outer layer being a SSC or metallocene polyethylene/α-olefin film which may have a density in the range of 0.88 to 0.93 gm/cc. The only requirements placed on the stiffening interposed layer are that it be of a particular thickness and density. These are greater in the stiffening layer than in the metallocene or SSC layer(s). This application indicates that the stiffening layer is included in order for the fluid containing pouch to stand up properly so that fluid may be poured from it when the pouch is placed in a supporting container.

DUPONT CANADA INC.'s U.S. Patents Nos. 4,503,102(Mollison) and 4,521,437(Storms), the disclosures of which are incorporated by reference disclose a polyethylene film for use in the manufacture in a form, fill and seal process of a disposable pouch for liquids such as milk. U.S. Patent No. 4,503,102 discloses pouches made from a blend of a linear copolymer of ethylene and a C₄ -C₁₀ α-olefin and an ethylene-vinyl acetate polymer copolymerized from ethylene and vinyl acetate. The linear polyethylene copolymer has a density of from 0.916 to 0.930 g/cm³ and a melt index of from 0.3 to 2.0 g/10 minutes. The ethylene-vinyl acetate polymer has a weight ratio of ethylene to vinyl acetate from 2.2:1 to 24:1 and a melt index of from 0.2 to 10 g/10 minutes. The blend disclosed in Mollison U.S. Patent No. 4,503,102 has a weight ratio of linear low density polyethylene to ethylene-vinyl acetate polymer of from 1.2:1 to 24:1. U.S. Patent No. 4,503,102 also discloses multilayer films having as a sealant film the aforementioned blend.

U.S. Patent No. 4,521,437 (Storms) describes pouches made from a sealant film which is from 50 to 100 parts of a linear copolymer of ethylene and octene-1 having a density of from 0.916 to 0.930 g/cm³ and a melt index of 0.3 to 2.0 g/10 minutes and from 0 to 50 parts by weight of at least one polymer selected from the group consisting of a linear copolymer of ethylene and a C₄-C₁₀-α-olefin having a density of from 0.916 to 0.930 g/cm³ and a melt index of from 0.3 to 2.0 g/10 minutes, a high-pressure polyethylene having a density of from 0.916 to 0.924 g/cm³ and a melt index of from 1 to 10 g/10 minutes and blends thereof. The sealant film disclosed in U.S. Patent No. 4,521,437 is selected on the basis of providing (a) pouches with an M-test value substantially smaller, at the same film thickness, than that obtained for pouches made with film of a blend of 85 parts of a linear ethylene/butene-1 copolymer having a density of about 0.919 g/cm³ and a melt index of about 0.75 g/10 minutes and 15 parts of a high pressure polyethylene having a density of about 0.918 g/cm³ and a melt index of 8.5 g/10 minutes, or (b) an M(2)-test value of less than about 12%, for pouches having a volume of from greater than 1.3 to 5 litres, or (c) an M(1.3)-test value of less than about 5% for pouches having a volume of from 0.1 to 1.3 litres. The M, M(2) and M(1.3)-tests are defined pouch drop tests for U.S. Patent No. 4,521,437. The pouches may also be made from composite films in which the sealant film forms at least the inner layer.

In Falla et al WO 93/02859 published February 18, 1993, the disclosure of which is incorporated herein by reference, there is described the use of a linear ethylene copolymer in the manufacture of films used to make fluid containing pouches. These copolymers are characterised as ultra low density linear polyethylene ("ULDPE") sold commercially as ATTANE™ by Dow and described as a linear copolymer of ethylene with at least one α-olefin having from 3 to 10 carbon atoms. The ULDPE may be selected from ethylene-1-propylene, ethylene-1-butene, ethylene-1-pentene, ethylene-4-methyl-1-pentene, ethylene-1-hexene, ethylene-1-heptene, ethylene-1-octene and ethylene-1-decene copolymers, and is preferably ethylene-1-octene copolymer.

In Meka et al WO 93/03093 published February 18, 1993, the disclosure of which is incorporated herein by reference, there are described metallocene polymers useful for making sealed articles, comprising ethylene interpolymers having a CDBI of at least 50% and a narrow molecular weight distribution or a polymer blend comprising a plurality of said ethylene interpolymers as blend components.

### SUMMARY OF THE INVENTION

In one aspect, the present invention provides a multilayer polyolefin film for use in a vertical form fill seal packaging comprising at least one non-outer layer of syndiotactic polypropylene with a density of from 0.89 to 0.90 gm/cm³ and a melt index of from 0.5 to 2.0 dg/min and at least 60% *rrrr* pentads measured using NMR, together with at least two layers of an interpolymer of ethylene and at least one C₃-C₂₀ alpha-olefin having a density of less than 0.910 gm/cm³ and a melt index of from 0.5 to 2.0 dg/min.

In a preferred form of the invention, non sPP layer(s) are preferably made from an ethylene/octene or ethylene/hexene copolymer with a density of less than about 0.910 gm/cm³ to maximize durability and clarity and minimize the heat required for the cut through seal. With multiple layers of sPP, the overall volume fraction of sPP should not exceed 40%. Metallocene ethylene/octene or ethylene/hexene plastomers, are preferred over very low density polyethylene copolymers made using Zeigler-Natta catalyst processes, because of the low heat seal initiation, good toughness and good organoleptic properties are associated with metallocene polymers.

Each layer of syndiotactic polypropylene (sPP) layer should represent no more than 20% of the overall structure and the total fraction of sPP layers should not exceed 40%. The syndiotactic polypropylene should have at least 60% *rrrr* pentads as measured using NMR.

The films of the present invention possess many advantages. The notable advantages include clarity, low heat seal temperature, low cut through temperature and good stiffness.

The films are exceptionally clear. Typical haze values may range from 4 to 5 on 76µ thick films as compared to haze values of 10 for linear low density polyethylene (lldpe) films of similar thickness.

Compared to lldpe linear low density polyethylene films, low amounts of heat are required to develop tack seals (vertical seals) and cut through seal (horizontal seals). Settings for sealing and cut through with the present films may be 25 to 50% lower than for lldpe films. The lower heat input permits longer heating element life and especially longer release tape life.

The multilayer films are stiff. Replacing lldpe with plastomer usually has the drawback that the films are too soft and tend to stretch during high-speed packaging or printing operations. The sPP layer in the multilayer film provides stiffening to the overall film to compensate for the replacement of lldpe with plastomer.

The stiffness of the film permits downgauging from 76 to 63µm.

The previously referenced patents and applications describe the various processes that may be used to manufacture the pouches of this invention. Vertical form, fill and seal apparatus is used to make the pouches envisaged herein. A flat web of film is unwound from a roll and formed into a continuous tube in a tube forming section by sealing the longitudinal edges together by either a lap seal or a fin seal. This tube is pulled vertically towards a filling station and is then collapsed across a transverse cross section of the tube, the position of which section coincides with a sealing device below a filling station. A transverse heat seal is made at the section providing an air and liquid tight seal across the tube.

The material to be packaged enters the tube above the transverse seal, the tube drops a predetermined distance under the influence of gravity on its load. The sealing device is operated again, and a second transverse seal is made together with a cut through the tube and often through the material placed in the pouch. Thus in this operation, the pouch which has an elongate pillow shape is formed, filled and sealed in a rapid sequence of steps. Many variations of this process are possible and are apparent to those skilled in the art. Examples of typical liquid packaging apparatus used for this type of manufacture are made by Hayssen, Thimonnier and Prepac.

The term "flowable materials" as used herein encompasses materials which flow under gravity or which may be pumped. Gaseous materials are not included in this definition. The flowable materials include liquids, for example, milk, water, fruit juice, oil; emulsions, for example, ice cream mix, soft margarine, pastes, for example, meat pastes, peanut butter; preservers, for example, jams, pie fillings, marmalade; jellies; doughs; ground meat, for example, sausage meat; powers, for example, gelatine powders, detergents; granular solids, for example, nuts, sugar; and like materials. The pouch of the present invention is particularly useful for liquid foods, for example, milk.

The resins used to make the film of this invention are preferably coextruded in known ways, although other suitable methods may be used, such as those involving laminates, coatings and the like. All forms of conventional laminating and coating methods may be used to manufacture the present films, including extrusion coating, roll coating, 100% solids lamination, water and solvent based adhesive laminations and the like. When blends are used, these may be made by blending the components prior to or at the time of extrusion just prior to remelting in the extruder. A film extruder may be used and the film made using known techniques. An example of a blown film process is found in Canadian Patent No. 460,963 issued November 8, 1949 to Fuller. Canadian Patent No. 893,216 issued February 15, 1972 to Bunga et al describes a preferred method using an external or internal cooling mandrel in the blown film process.

Additives, known to those skilled in the art, such as anti-block agents, slip additives, UV stabilisers, pigments and processing aids including high pressure polyethylene may be added to the polymers from which the pouches of the present invention are made. Typically these may comprise up to 50% by weight of total resin components, although as previously indicated, when the additional additives and other components reach this proportion, it is important to be sensitive to the desired hot tack strength enhancement for the structure.

As stated previously, the film of this invention may be used in packaging applications where sealing properties, particularly hot tack strength is important. Reference may be had to The Wiley Encyclopaedia of Packaging Technology, 1986, John Wiley & Sons, Inc., under the heading Heat Sealing, the disclosures of which are incorporated herein by reference. Descriptions are found here for all types of heat sealing including bar, band, impulse, wire or knife, ultrasonic, friction, gas, contact, hot melt, pneumatic, dielectric, magnetic, induction, radiant and solvent sealing. Any of these techniques that lend themselves to packaging materials incorporating the film of this invention fall within the scope of this disclosure. Most preferred are packages made by impulse sealing.

### DETAILED DESCRIPTION OF THE INVENTION

### Examples:

The following examples are included to illustrate the invention only.

The following is a description of the properties measured and tests performed on the films prepared in accordance with the present invention.

**Haze** was measured using the film samples according to ASTM procedure D1002. Haze represents the cloudy or turbid aspect or appearance of an otherwise transparent specimen caused by light scattering from within the specimen or from its surface. In this test a low haze value expressed in %, indicates the film is relatively clear. Haze is determined by measuring the fraction of incident light than when passing through the specimen deviates from the incident beam through forward scatter by more than 2.5°. The reported Haze value will depend on film thickness. The greater the film thickness the greater the haze value. An average of two samples is reported in the subsequent examples.

**Elmendorf Tear** was measured on film samples according to ASTM D1922 in both machine and transverse film directions. The reported results are an average of four tests. The Elmendorf Tear value is used to estimate a films resistance to propagating a tear. In the test, the film is intentionally notched to initiate the place on the film where tearing will occur. The test then measures the difficulty to continue or propagate the tear. In a form/fill/seal package like the liquid pouch, the cut-through horizontal seal area often has notches or nicks left in the film from which tears will propagate during handling and/or shipping. The Elmendorf Tear test is a useful predictor of how well the area of horizontal seal (which is a cut through seal) will stand up to this abuse. Higher Elmendorf Tear values are preferred.

**M-Test** - The M-tests are hereinafter described in detail. In general terms the M-test is a drop test carried out on 1.3 liter water-filled pouches. In the M(1.3)-test, pouches containing 1.3 liters of water are made from a 32.4 cm. wide film web, on a Prepac IS-6™ vertical form and fill machine. The web of film is formed into a continuous tube with a lap seal, said tube having an inside diameter of approximately 9.75 cm. Each pouch size will require an appropriate set of forming plates to handle the corresponding film web width. The vertical sealing jaw of the Prepac IS-6™ machine has a 3.5 by 0.33 mm rectangular sealing wire made of Nichrome™ alloy. The transverse sealing jaw of the machine has a 1.8 by 0.69 mm sealing wire made of Nichrome™ alloy. Preferably, operation of the vertical and transverse sealing element is optimized for the particular film type and film thickness used. Typically, during vertical sealing of the tube, a 35-50 amp current at 14-24 volts is passed through the sealing wire for 0.24-0.45 seconds. The force applied by the vertical sealing jaws to the film is about 8.2 N applied for a dwell time of about 0.9 seconds. The vertical sealing jaw is cooled by water at 13°±6°C. During transverse sealing of the tube, a 35-55 amp current at 10-15 volts is passed through the sealing wire for 0.24-0.45 seconds. The force applied by the transverse sealing jaws to the film is about 19 N applied for a dwell time of about 0.9 seconds. The transverse sealing jaw is cooled by water at 13°±6°C. Both sealing jaws have 152µm thick glass fiber tape impregnated with Teflon™ polytetrafluoroethylene resin. With respect to optimizing the sealing operations, it will be recognized that the sealing conditions (e.g. amperage, voltage, dwell time) depend on the gauge and melting characteristics of the film. For example, a 51µm film would require lower amperage and voltage, as controlled by the rheostat on the machine, than would a 76µm film. Typically such a gauge change requires an adjustment of approximately 10% of the rheostat range. For this test, water-filled pouches so formed were dropped onto a concrete floor from a height of 8 feet (244 cm) after the temperature of the water has reached room temperature, i.e. 20°±4°C. The pouches are positioned with the longitudinal axis of the tube, i.e. pouch, coincident with an imaginary vertical line.

Any pouch from which water flows or weeps after the pouch has been dropped onto the floor, is termed a "leaker". The number of leakers, expressed as a percentage of the total number of pouches dropped is the M-test value for the particular film being tested. It will be noted that the M-test value will be affected by the thickness of the film as well as the material from which the film is made.

It should be noted that it is in the sealant film that is selected upon the basis of the M-test values. It is to be understood, therefore, that pouches made with other pouch-forming machines come within the scope of the present invention.

In the examples that follow below, all films were made by blown film extrusion using a 6" (15.2 cm) diameter blown film die. The die gap was 0.065" (1.65 mm) and the blow up ratio was 2.2/1. A dual lip air ring was used to quench the expanding bubble.

**Table 1**

| **Monolayer Syndiotactic Polypropylene Films** | | | | |
|---|---|---|---|---|
| **Example** | **Overall Gauge (µm)** | **Haze (%)**^{**1**} | **MD Elmendorf Tear** ^{**2**}**(gm/mil)** | **Pouch Drop (% failure)**^{**3**} |
| 1 | 80 | 10 | 21 | 100% |
| 2 | 125 | 9 | 32 | 100% |

| | | | | |
|---|---|---|---|---|
| 1. Measured using ASTM D1002 | | | | |
| 2. Measured usingASTM D1922 (1 gm/mil = 3.86 · 10² N/m) | | | | |
| 3. Could not make 1.3-liter water filled pouches that would withstand 8-ft (244 cm) drop due to weak horizontal seals. | | | | |

**Table 2**

| **A/B/A ---- sPP/lldpe/sPP structures** | | | | | | |
|---|---|---|---|---|---|---|
| **Example** | **Overall Gauge (µm)** | **Type and (Thickness of A layers (µm))** | **Type and Thickness of B layer** | **Haze (%)**^{**1**} | **MD Elmendorf Tear** ^{**2**}**(gm/mil)** | **Pouch Drop (% failure)**^{**3**} |
| 3 | 80 | sPP (15) | SL-1150 0.91 density, 1.5 MI uldpe (50) | 17 | 75 | 100% |
| 4 | 125 | sPP(25) | Sclair® E032-08 (0.912 density, 0.8MI uldpe (75) | 15 | 141 | 100% |

| | | | | | | |
|---|---|---|---|---|---|---|
| 1. Measured using ASTM D1002 | | | | | | |
| 2. Measured using ASTM D1922 (1 gm/mil = 3. 86 · 10² N/m) | | | | | | |
| 3. Could not make 1.3-liter water filled pouches that would withstand 8-ft (244 cm) drop due to weak horizontal seals. | | | | | | |

**Table 3**

| **A/B/A ---- vldpe/sPP/vldpe films ...** where the vldpe (very low density polyethylene) is Dow Affinity PL 1880 (0.90 density, 1 MI ethylene octene copolymer) | | | | | | |
|---|---|---|---|---|---|---|
| **Example** | **Overall Gauge (µm)** | **Thickness of PL 1880 "A" layers (µm)** | **Thickness of sPP "B" layer (µm)** | **Haze (%)**^{**1**} | **MD Elmendorf Tear** ^{**2**}**(gm/mil)** | **Pouch Drop (% failure)**^{**3**} |
| 5 | 80 | 40 | 0 | 9 | 299 | 4 |
| 6 | 80 | 32 | 16 | 4.6 | 423 | 4 |
| 7 | 80 | 24 | 32 | 4.5 | 166 | 18 |
| 8 | 80 | 16 | 48 | 4.6 | 59 | 100 |
| 9 | 80 | 8 | 64 | 4.1 | 35 | 100 |
| 10 | 80 | 0 | 80 | 2.7 | | 100 |

| | | | | | | |
|---|---|---|---|---|---|---|
| 1. Measured using ASTM D1002 | | | | | | |
| 2. Measured using ASTM D1922 (1 gm/mil = 3.86 · 10² N/m) | | | | | | |
| 3. Water filled 1.3-liter pouches were dropped from a height of 8 feet (244 cm) onto concrete floor. With film 10, it was not possible to make 1.3 liter water filled pouches that would withstand 8 ft (244 cm) drop due to weak horizontal seals | | | | | | |

### BRIEF DESCRIPTION OF THE DRAWINGS

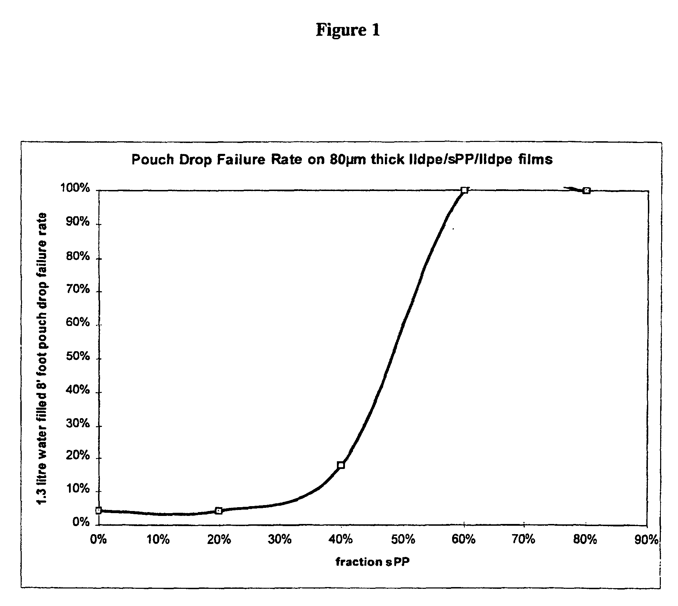

Figure 1 is a graph which summarizes the pouch drop failure rate as a function of the fraction sPP in the core layer. There is a significant deterioration in pouch drop performance when the sPP layer represents more than 40% of the overall structure.

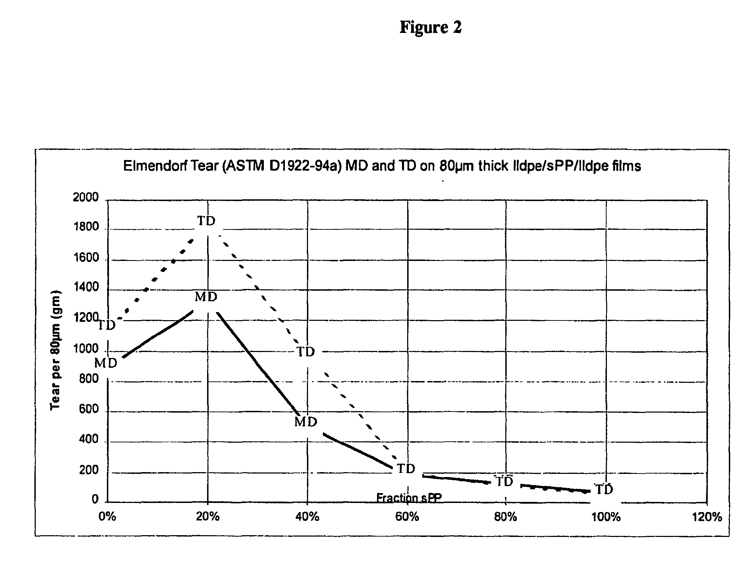

Figure 2 is a graph which summarizes the changes in Elmendorf Tear Properties (MD and TD) as a function of fraction sPP in the core layer of an A/B/A coextrusion. Elmendorf Tear Properties (either MD or TD) are optimized when the thickness of the "B" sPP layer in the A/B/A coextrusion represents 20% of the overall film thickness.

**Table 4**

| **Monolayer sPP films containing minor amounts of polyethylene...** where the vldpe is either Dow Affinity PL 1880 (0.90 density, 1 MI ethylene octene copolymer) or Dow Affinity SL 1170 (0.91 density, 1.5 MI) or Dow Elite 5100 (0.92 density, 0.85MI) | | | | | | |
|---|---|---|---|---|---|---|
| **Example** | **Overall Gauge (µm)** | **Weight Fraction sPP** | **Resin Type Minor Component** | **Haze (%)**^{**1**} | **MD Elmendorf Tear** ^{**2**}**(gm/mil)** | **Pouch Drop (% failure)**^{**3**} |
| 11 | 125 | 70 | Elite 5100 | 15.4 | 59 | 100 |
| 12 | 125 | 90 | Elite 5100 | 19.5 | 48 | 100 |
| 13 | 125 | 70 | Affinity® PL 1880 | 4.6 | 68 | 100 |
| 14 | 125 | 90 | Affinity® PL 1880 | 7.3 | 43 | 100 |
| 15 | 125 | 80 | Affinity® SL 1170 | 8.4 | 58 | 100 |

| | | | | | | |
|---|---|---|---|---|---|---|
| 1. Measured using ASTM D1002 | | | | | | |
| 2. Measured using ASTM D1922 (1 gm/mil = 3. 86 · 10² N/m) | | | | | | |
| 3. The pouches failed the 1.3 liter water filled pouches drop from 8 feet (244 cm) because all the pouches were very fragile due to weak horizontal seals | | | | | | |

**Table 5**

| **A/B/C/B/A ---- vldpe/sPP/vldpe/sPP/vldpe films** ... where "A" and "C" layers were Dow Affinity PL 1880 (0.90 density, 1 MI ethylene octene copolymer) | | | | | | | |
|---|---|---|---|---|---|---|---|
| **Example** | **Overall Gauge (µm)** | **Thickness "A" & "C" layers (µm)** | **Thickness of sPP "B" layers (µm)** | **Pouch Dimensional Stability** | **Haze (%)**^{**1**} | **MD Elmendorf Tear** ^{**2**}**(gm/mil)** | **Pouch Drop (% failure)**^{**3**} |
| 16 | 51 | 10 & 11 | 10 | Poor | 6 | 138 | 30 |
| 17 | 76 | 7.5 & 31 | 15 | OK | 4.0 | 175 | 9 |
| 18 | 76 | 15 & 16 | 15 | OK | 4.1 | 209 | 9 |
| 19 | 51 | 5 & 21 | 10 | Poor | 4.2 | 165 | 20 |
| 20 | 51 | 5 & 31 | 5 | Poor | 4.7 | 236 | 22 |
| 21 | 76 | 15 & 31 | 7.5 | OK | 4.3 | 315 | 9 |
| 22 | 63 | 9.5 & 25 | 9.5 | OK | 4.5 | 266 | 12 |
| 23 | 51 | 10 & 21 | 5 | Poor | 4.2 | 211 | 16 |
| 24 | 76 | 7.5 & 46 | 7.5 | OK | 4.4 | 255 | 12 |

| | | | | | | | |
|---|---|---|---|---|---|---|---|
| 1. Measured using ASTM D1002 | | | | | | | |
| 2. Measured using ASTM D1922 (1 gm/mil = 3.86 · 10² N/m) | | | | | | | |
| 3. Water filled 1.3-liter pouches were dropped from a height of 8 feet (244 cm) onto concrete floor. | | | | | | | |

Pouch Dimension stability was a qualitative measure of how well the pouch maintained its dimensions during handling and drop testing. A rating of OK indicated the original length and width were maintained. "Poor" indicates the pouch bloated or stretched.

### DISCUSSION OF RESULTS

### Examples 1 and 2: Monolayer sPP films

These example films demonstrate that monolayer sPP films at either 80 or 125µ make fragile pouches with poor heat seal strength, very low tear resustance and inferior pouch drop resistance. They were however, relatively clear (low haze). In summary, it was found that monolayer sPP films are:
very clear (low haze);
have no durability in a vffs pouch (100% seal failure on 8' (244 cm) drop); and
the Elmendorf Tear properties were very poor (less than 50 gm/mil).

### Examples 3 and 4: sPP/lldpe/SPP structures

Films with sPP seal layers and lldpe core layers were found to have again very low heat seal strengths and consequently very poor pouch drop resistance. There was a significant improvement in Elmendorf Tear but that did not translate to good pouch drop performance. In summary, the testing of A/B/A structures of sPP outers and lldpe or uldpe inner layers found:
improved Elmendorf Tear properties relative to monolayer sPP;
pouch drop performance remained very poor (because the seals failed); and
no need for coextrudable adhesive to get adhesion between sPP and lldpe.

### Examples 5 to 11

These films were all A/B/A structures where the B layer comprised sPP and the A layer comprised 0.90 density plastomer. These eight films demonstrated that:
the failure rate on 8' pouch drops was acceptable up to about 40% sPP in the core layer; and
Elmendorf Tear properties are optimized on an A/B/A film containing about 20% sPP.

### Examples 11 to 15

These films were all monolayer films made from sPP and up to 30wt% polyethylene. It was found that:
adding lldpe to sPP improved tear properties as determined by Elmendorf Tear; and
pouches made from the films still had very week seals. The horizontal seals in particular remained very weak.

### Examples 16 to 24

Analysis of the results in Table 5 indicated that in terms of improving pouch drop performance the most important factor was the thickness of the film. Increasing the thickness reduced the pouch drop failure rate. Minor influences on the 8' (244 cm) pouch drop failure rate were thickness of the seal layer (increasing the amount of plastomer in the seal layer reduced the failure rate. Another minor influence was the amount of sPP in the "B" layer. Reducing the sPP would reduce the pouch drop failure rate. The pouch drop failure rate of 12% on the 63-µm thick film Example 22 looked especially encouraging since thicker 76-µm pouches had similar failure rates. Pouches made from 51µm thick films had unacceptable dimensional stability.

The pouch making and pouch drop testing were repeated with selected films from Table 5 this time at 60 pouches per minute to determine the advantages of the 5 layer coextrusion with sPP to reduce the heat setting.

**Table 6**

| **A/B/C/B/A ---- vldpe/sPP/vldpe/sPP/vldpe films** ... 1.3 liter Pouches were made at 60 pouches per head per minute. | | | | |
|---|---|---|---|---|
| **Film Example** | **Overall Gauge (µm)** | **Vertical Seal Setting** | **Horizontal Seal Setting** | **Pouch Drop (% failure) from 8' (244 cm)** |
| 25 (control) | 76 | 57 | 72 | 12 |
| 18 | 76 | 40 | 35 | 25 |
| 21 | 76 | 42 | 40 | 16 |
| 22 | 63 | 30 | 40 | 4 |
| 24 | 76 | 40 | 40 | 7 |
| 5 (control) | 80 | 35 | 40 | 2 |

Table 6 indicates that Example Film 22 (5 layer coex with plastomer outer and core layers and sPP intermediate layers) seals at significantly lower horizontal heat-seal settings relative to monolayer lldpe structure's. These lower heat seal setting will translate to improved heat sealing element life and longer release tape life. The gauge of this film can be reduced on the 5 layer A/B/A/B/A coex from 76 µm to 63 µm while maintaining pouch dimensional stability and durability relative to control monolayer polyethylene films made from 0.92 density lldpe.

### Examples 25 and 5

### Example 25

A 76µm thick ethylene/octene lldpe monolayer film (0.920 density, 0.72 MI lldpe). Haze value was 14.

### Example 5

An 80µm thick monolayer ethylene octene plastomer film (0.90 density, 1.0 MI). Haze value was 9.

### Examples 18, 21 to 24

These were A/B/A/B/A coextrusions wherein the "A" layer was 0.90 density plastomer and the B layer was sPP. It was found that a preferred construction was a 63µm thick film comprised of layers 15%/15%/40%/15%/15%. This film produced 1.3-liter water filled pouches with good stability during fabrication and handling, with excellent clarity (low haze), low heat seal settings, and low failure rates on 1.3-liter water filled pouch drops from 8' (244 cm).

## Claims

1. A multilayer polyolefin film for use in vertical form fill seal packaging comprising at least one non-outer layer of syndiotactic polypropylene with a density of from 0.89 to 0.90 gm/cm³ and a melt index of from 0.5 to 2.0 dg/min and at least 60% *rrrr* pentads measured using NMR, together with at least two layers of an interpolymer of ethylene and at least one C₃-C₂₀ alpha-olefin having a density of less than 0.910 gm/cm³ and a melt index of from 0.5 to 2.0 dg/min.

2. A multilayer polyolefin film as claimed in claim 1 where more than one layer of syndiotactic polypropylene is present and the overall volume fraction of syndiotactic polypropylene does not exceed 40%.

3. A multilayer polyolefin film as claimed in claim 1 wherein the interpolymer is made from a single-site catalyst polymerization process, or a mixture of single-site catalyst and non-single-site catalyst polymerization process.

4. A process for making pouches for containing a flowable material, using a vertical form, fill and seal apparatus, in which process each pouch is made from a flat web of film by forming a tubular film thereform with a longitudinal seal and subsequently flattening the tubular film at a first position and transversely heat sealing said tubular film at the flattened position, filling the tubular film with a predetermined quantity of flowable material above said first position, flattening the tubular film above the predetermined quantity of flowable material at a second position and transversely heat sealing said tubular film at the second position, and which process is **characterised in that** a multilayer polyolefin film is used comprising at least one non-outer layer of syndiotactic polypropylene with a density of from 0.89 to 0.90 gm/cm³ and a melt index of from 0.5 to 2.0 dg/min and at least 60% *rrrr* pentads measured using NMR, together with at least two layers of an interpolymer of ethylene and at least one C₃-C₂₀ alpha-olefin having a density of less than 0.910 gm/cm³ and a melt index of from 0.5 to 2.0 dg/min.

5. A pouch for containing a flowable material, having at least two heat sealed edges, made from a multilayer polyolefin film for use in a vertical form fill seal packaging comprising at least one non-outer layer of syndiotactic polypropylene with a density of from 0.89 to 0.90 gm/cm³ and a melt index of from 0.5 to 2.0 dg/min and at least 60% *rrrr* pentads measured using NMR, together with at least two layers of an interpolymer of ethylene and at least one C₃-C₂₀ alpha-olefin having a density of less than 0.910 gm/cm³ and a melt index of from 0.5 to 2.0 dg/min.

## Patentansprüche

1. Mehrschichtpolyolefinfolie zur Verwendung in vertikaler Form-, Füll- und Verschließverpackung, umfassend mindestens eine nichtäußere Schicht aus syndiotaktischem Polypropylen mit einer Dichte von 0,89 bis 0,90 g/cm³ und einem Schmelzindex von 0,5 bis 2,0 dg/min und mindestens 60% *rrrr*-Pentaden, gemessen unter Verwendung von NMR, zusammen mit mindestens zwei Schichten eines Interpolymers von Ethylen und mindestens einem C₃-C₂₀-alpha-Olefin mit einer Dichte von weniger als 0,910 g/cm³ und einem Schmelzindex von 0,5 bis 2,0 dg/min.

2. Mehrschichtpolyolefinfolie nach Anspruch 1, wo mehr als eine Schicht aus syndiotaktischem Polypropylen vorhanden ist und der Gesamtvolumenanteil von syndiotaktischem Polypropylen 40% nicht überschreitet.

3. Mehrschichtpolyolefinfolie nach Anspruch 1, wobei das Interpolymer aus einem Polymerisationsverfahren mit Single-Site-Katalysator oder einem Polymerisationsverfahren mit einem Gemisch von Single-Site-Katalysator und nicht-Single-Site-Katalysator hergestellt wird.

4. Verfahren zur Herstellung von Beuteln zum Aufnehmen eines fließfähigen Materials, wobei eine vertikale Form-, Füll- und Verschließapparatur verwendet wird, bei welchem Verfahren jeder Beutel aus einer flachen Bahn von Folie hergestellt wird, indem daraus eine röhrenförmige Folie mit einem Längsverschluß erzeugt wird und nachfolgend die röhrenförmige Folie an einer ersten Position flachgedrückt wird und die röhrenförmige Folie an der flachgedrückten Position quergerichtet heißverschweißt wird, die röhrenförmige Folie mit einer vorherbestimmten Menge von fließfähigem Material über der ersten Position gefüllt wird, die röhrenförmige Folie über der vorherbestimmten Menge von fließfähigem Material an einer zweiten Position flachgedrückt wird und die röhrenförmige Folie an der zweiten Position quergerichtet heißverschweißt wird, und welches Verfahren **dadurch gekennzeichnet ist, daß** eine Mehrschichtpolyolefinfolie verwendet wird, umfassend mindestens eine nichtäußere Schicht aus syndiotaktischem Polypropylen mit einer Dichte von 0,89 bis 0,90 g/cm³ und einem Schmelzindex von 0,5 bis 2,0 dg/min und mindestens 60% *rrrr*-Pentaden, gemessen unter Verwendung von NMR, zusammen mit mindestens zwei Schichten eines Interpolymers von Ethylen und mindestens einem C₃-C₂₀-alpha-Olefin mit einer Dichte von weniger als 0,910 g/cm³ und einem Schmelzindex von 0,5 bis 2,0 dg/min.

5. Beutel zum Aufnehmen eines fließfähigen Materials mit mindestens zwei heißverschweißten Kanten, hergestellt aus einer Mehrschichtpolyolefinfolie zur Verwendung in einer vertikaler Form-, Füll- und Verschließverpackung, umfassend mindestens eine nichtäußere Schicht aus syndiotaktischem Polypropylen mit einer Dichte von 0,89 bis 0,90 g/cm³ und einem Schmelzindex von 0,5 bis 2,0 dg/min und mindestens 60% *rrrr*-Pentaden, gemessen unter Verwendung von NMR, zusammen mit mindestens zwei Schichten eines Interpolymers von Ethylen und mindestens einem C₃-C₂₀-alpha-Olefin mit einer Dichte von weniger als 0,910 g/cm³ und einem Schmelzindex von 0,5 bis 2,0 dg/min.

## Revendications

1. Film de polyoléfine multicouche pour une utilisation dans un emballage de formage, remplissage et scellement vertical comprenant au moins une couche non externe de polypropylène syndiotactique avec une densité de 0,89 à 0,90 g/cm³ et un indice de fluidité de 0,5 à 2,0 dg/min et au moins 60% de pentades *rrrr* mesurés en employant une analyse RMN, accompagnée d'au moins deux couches d'un interpolymère d'éthylène et d'au moins une alpha-oléfine C₃-C₂₀ présentant une densité inférieure à 0,910 g/cm³ et un indice de fluidité de 0,5 à 2,0 dg/min.

2. Film de polyoléfine multicouche suivant la revendication 1, dans lequel il est présent plus d'une couche de polypropylène syndiotactique et 1a fraction de volume globale de polypropylène syndiotactique ne dépasse pas 40%.

3. Film de polyoléfine multicouche suivant la revendication 1, dans lequel l'interpolymère est fabriqué à partir d'un procédé de polymérisation à catalyseur à site unique ou d'un mélange de procédés de polymérisation à catalyseurs à site unique et à site non unique.

4. Procédé pour fabriquer des sachets permettant de contenir un matériau apte à l'écoulement, en mettant en oeuvre un appareil de formage, remplissage et scellement vertical, dans lequel procédé chaque sachet est fabriqué à partir d'une bande plate de film en formant un film tubulaire à partir de celle-ci avec un scellement longitudinal et par la suite en aplatissant le film tubulaire à un premier endroit et en scellant à chaud transversalement ledit film tubulaire à l'endroit aplati, en remplissant le film tubulaire avec une quantité prédéterminée de matériau apte à l'écoulement au-dessus dudit premier endroit, en aplatissant le film tubulaire au-dessus de la quantité prédéterminée de matériau apte à l'écoulement à un deuxième endroit et en scellant à chaud transversalement ledit film tubulaire au deuxième endroit, et lequel procédé est **caractérisé en ce qu'**un film de polyoléfine multicouche est utilisé comprenant au moins une couche non externe de polypropylène syndiotactique avec une densité de 0,89 à 0,90 g/cm³ et un indice de fluidité de 0,5 à 2,0 dg/min et au moins 60% de pentades *rrrr* mesurés en employant une analyse RMN, accompagnée d'au moins deux couches d'un interpolymère d'éthylène et d'au moins une alpha-oléfine C₃-C₂₀ présentant une densité inférieure à 0,910 g/cm³ et un indice de fluidité de 0,5 à 2,0 dg/min.

5. Sachet permettant de contenir un matériau apte à l'écoulement, possédant au moins deux bords scellés à chaud, fabriqué à partir d'un film de polyoléfine multicouche pour une utilisation dans un emballage de formage, remplissage et scellement vertical comprenant au moins une couche non externe de polypropylène syndiotactique avec une densité de 0,89 à 0,90 g/cm³ et un indice de fluidité de 0,5 à 2,0 dg/min et au moins 60% de pentades *rrrr* mesurés en employant une analyse RMN, accompagnée d'au moins deux couches d'un interpolymère d'éthylène et d'au moins une alpha-oléfine C₃-C₂₀ présentant une densité inférieure à 0,910 g/cm³ et un indice de fluidité de 0,5 à 2,0 dg/min.
